# EUROPEAN PATENT SPECIFICATION

(11) **EP 3 315 867 B1**
(45) Date of publication and mention of the grant of the patent: **27.03.2019**
(21) Application number: 16195695.8
(22) Date of filing: 26.10.2016
(51) Int. Cl.: F24D 11/00, F28D 20/00

(54) **MULTI-PIPE-SWITCHING HEAT EXCHANGE APPARATUS**
WÄRMEAUSTAUSCHVORRICHTUNG MIT MEHRFACHROHRSCHALTUNG
APPAREIL D'ÉCHANGE DE CHALEUR À COMMUTATION MULTITUBE

(43) Date of publication of application: 02.05.2018
(73) Proprietor: Suncue Company Ltd., Taichung City (TW)
(72) Inventor: LIN, Jung-Lang, Taichung City (TW)
(74) Representative: Viering, Jentschura & Partner mbB Patent- und Rechtsanwälte

(56) References cited:
- EP-A1- 3 073 200
- DE-U1-202007 018 564
- DE-U1-202016 001 999
- GB-A- 2 473 684
- US-A1- 2014 373 825

## Description

### 1. Field of the Invention

The present invention relates to a heat exchange apparatus, and more particularly to a multi-pipe-switching heat exchange apparatus that may provide a multi-pipe-switching effect, may shorten the warm-up time, may be used with multiple functions, and may provide a buffering effect.

### 2. Description of Related Art

Conventional heat exchange apparatuses have been widely used in the industrial processes, and can be used for cooling, heating or recovering of waste heat. The conventional heat exchange apparatus has a heating end and an operation end. The operation end of the conventional heat exchange apparatus is connected to and communicates with the heating end to form a single pipe system. In actual use, the heating end can be a boiler and the operation end can be a greenhouse. A heat source may be generated by the boiler and is transported to the greenhouse via a piping that is connected to the boiler and the greenhouse, and this may provide a heat exchange effect.

Though the boiler of the conventional heat exchange apparatus may generate the heat source and transport the heat source to the greenhouse, the heat source is supplied via the single piping between the heating end and the operation end of the conventional heat exchange apparatus. When the piping is broken, the heat source cannot be transported to the operation end of the conventional heat exchange apparatus, and this is inconvenient in use and may increase the cost of using the conventional heat exchange apparatus. Additionally, the conventional heat exchange apparatus only can transport and supply the single heat source by the single piping, and cannot combine with other types of heat source for use. The other types of heat sources include, for example, combination of steam/hot water or combination of biomass/ fossil fuel. The conventional heat exchange apparatus only can transport and supply one single heat source or one single type of heat source, and other types of heat sources cannot be used to assist the conventional heat exchange apparatus. Then, the conventional heat exchange apparatus may take a long time to warm up, and this may increase the cost and time of using the conventional heat exchange apparatus.

For example, when using biomass fuels to generate the heat source, it may require a long time to start the conventional heat exchange apparatus, and also needs a long time to warm up. When an unexpected condition occurs, the conventional heat exchange apparatus cannot timely supply a sufficient heat source. In addition, using the fossil fuels to generate heat sources does not comply with the environmental regulations.

Furthermore, when the conventional heat exchange apparatus uses different types of heat sources at the heating end, the different types of heat sources have different operating conditions and are not compatible with the single piping, and may need a buffering mechanism to integrate the heat sources of different types and operating conditions with each other, and then a composited heat source can be used.

Additionally, the heat source that is generated from the heating end of the conventional heat exchange apparatus is directly transported to the operation end of the conventional heat exchange apparatus without a buffering mechanism deposited between the heating end and the operation end of the conventional heat exchange apparatus. When the amount of the heat source that is generated from the heating end is larger than the amount of the heat source that is required for the operation end, the temperature of the greenhouse is excessively high. Therefore, the conventional heat exchange apparatus cannot provide a buffering effect when the amount of the heat source that is generated is larger than the amount of the heat source that is used. Further, when maintenance and repair are required after a long period of use, since the conventional heat exchange apparatus is a single piping, there is no other standby heat energy available for use. Then, the conventional heat exchange apparatus must be stopped prior to the related maintenance operations, and this may increase the cost of use and inconvenience in maintenance.

In addition, a multi-pipe-switching heat exchange apparatus according to the preamble of claim 1 is disclosed in EP 3 073 200 A1.

To overcome the shortcomings, the present invention provides a multi-pipe-switching heat exchange apparatus to mitigate or obviate the aforementioned problems.

The main objective of the present invention is to provide a heat exchange apparatus, and more particularly to a multi-pipe-switching heat exchange apparatus that may provide a multi-pipe-switching effect, may shorten the warm-up time, may be used with multiple functions, and may provide a buffering effect.

This object is achieved with a heat exchange apparatus according to claim 1.

The multi-pipe-switching heat exchange apparatus in accordance with the present invention has a heating module, an auxiliary module, a buffering module, and an operation module. The heating module has at least one heating boiler. The auxiliary module is deposited beside the heating module and has at least one spare boiler. The buffering module is connected to and communicates with the heating module and the auxiliary module, and has a buffering body connected to and communicating with the at least one heating boiler and the at least one spare boiler, a first pipeline set deposited between the buffering body and the heating module, and a second pipeline set deposited between the buffering body and the auxiliary module. The operation module is connected to and communicates with the buffering module and has an operation end and a third pipeline set connected to and communicating with the buffering body and the operation end. Multiple valve modules are provided and each one of the valve modules being of the dual-tube type, deposited at a connecting end of the buffering body such that each one of the pipeline sets is connected to and communicates with the buffering body. Each one of the valve modules has two branch pipes connected to and communicating with the buffering body and one of the pipeline sets. Two pumps are deposited on the two branch pipes and multiple control valves are deposited on the branch pipes beside the pumps. A preheater is deposited beside the at least one heating boiler, connected to and communicating with the at least one heating boiler to adjust the temperature of the heat source before the heat source enters the at least one heating boiler via the preheater to prevent excessive temperature of the heat source from directly entering and damaging the at least one heating boiler. A first circulation loop being a closed loop, formed between the buffering body, the preheater, and the at least one heating boiler. A second circulation loop being a closed loop, formed between the buffering body and the at least one spare boiler; and a third circulation loop being is a closed loop, formed between the buffering body and the operation end of the operation module.

Other objectives, advantages and novel features of the invention will become more apparent from the following detailed description when taken in conjunction with the accompanying drawings.

### IN THE DRAWINGS:

Fig. 1 is a block diagram of a multi-pipe-switching heat exchange apparatus in accordance with the present invention;
Fig. 2 is a perspective side view in partial section of a first embodiment of a multi-pipe-switching heat exchange apparatus in accordance with the present invention;
Fig. 3 is an enlarged perspective side view in partial section of the multi-pipe-switching heat exchange apparatus in Fig. 2;
Fig. 4 is a further enlarged perspective side view in partial section of the multi-pipe-switching heat exchange apparatus in Fig. 3;
Fig. 5 is an enlarged and operational perspective side view of the multi-pipe-switching heat exchange apparatus in Fig. 2; and
Fig. 6 is a perspective side view in partial section of a second embodiment of a multi-pipe-switching heat exchange apparatus in accordance with the present invention.

### DETAILED DESCRIPTION OF THE PREFERRED EMBODIMENT

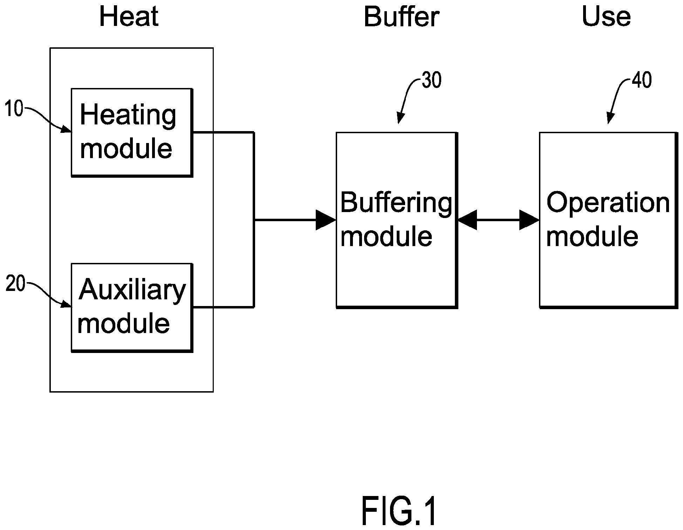

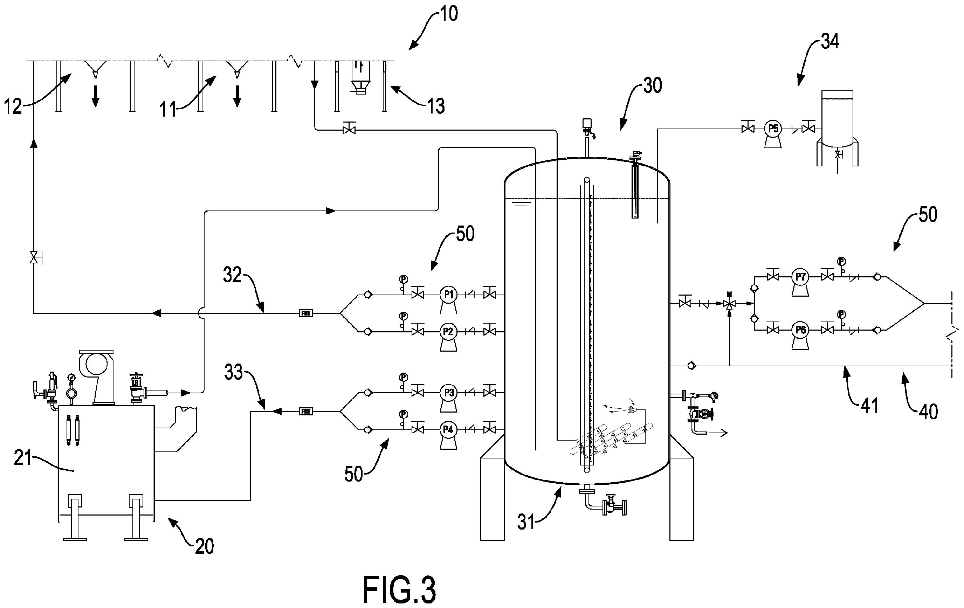

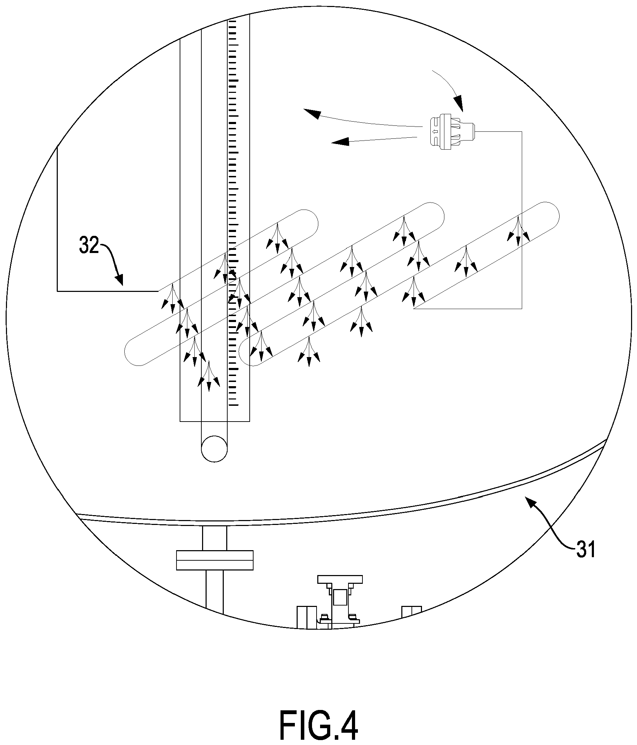

With reference to Figs. 1 to 5, a first embodiment of a multi-pipe-switching heat exchange apparatus in accordance with the present invention has a heating module 10, an auxiliary module 20, a buffering module 30, an operation module 40, and multiple valve modules 50.

The heating module 10 is used to produce a heat source and has at least one heating boiler 11, a preheater 12, and a chimney pipe group 13. The at least one heating boiler 11 is deposited uprightly and may be a steam boiler or a hot water boiler. The preheater 12 is deposited beside the at least one heating boiler 11, and is connected to and communicates with the at least one heating boiler 11. The preheater 12 may adjust the temperature of the heat source before the heat source enters the at least one heating boiler 11 via the preheater 12, and this may prevent the excessive temperature of the heat source from directly entering and damaging the at least one heating boiler 11. In addition, the heat source may be generated or supplied by a burner or a biomass fuel combustion furnace.

The chimney pipe group 13 is connected to and communicates with a top of the at least one heating boiler 11, is opposite the preheater 12, and is used to guide the heat source after heat exchanging and the fuel gas flowing out of the at least one heating boiler 11, and this may avoid excessive pressure causing danger within the at least one heating boiler 11. In addition, after heat exchange of the heat source and when the fuel gas flows out to the external environment via the chimney pipe group 13, this may provide an effect of discharging hot air and importing cold air.

The auxiliary module 20 is deposited beside the heating module 10 and has at least one spare boiler 21. The at least one spare boiler 21 may be a steam boiler or a hot water boiler. The buffering module 30 is connected to and communicates with the heating module 10 and the auxiliary module 20, and has a buffering body 31, a first pipeline set 32, a second pipeline set 33, and a fluid supply device 34. The buffering body 31 is connected to and communicates with the at least one heating boiler 11 and the at least one spare boiler 21, and has an exchange fluid to transport the heat sources that are generated from the at least one heating boiler 11 and the at least one spare boiler 21 in the buffering body 31.

The first pipeline set 32 is deposited and connected between the buffering body 31 and the heating module 10 to form a closed circulation loop (first circulation loop) between the buffering body 31, the preheater 12, and the at least one heating boiler 11. The second pipeline set 33 is deposited and connected between the buffering body 31 and the auxiliary module 20 to form a closed circulation loop (second circulation loop) between the buffering body 31 and the at least one spare boiler 21. The fluid supply device 34 is connected to and communicates with the buffering body 31 to supplement the content of the exchange fluid.

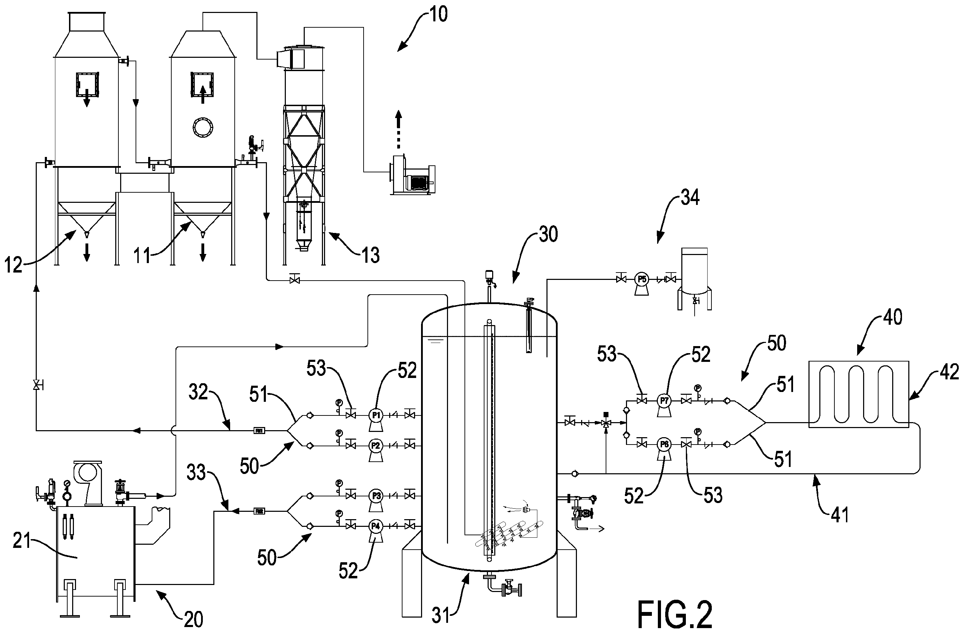

The operation module 40 is connected to and communicates with the buffering module 30 and has a third pipeline set 41 and an operation end 42. The third pipeline set 41 is connected to and communicates with the buffering body 31 and the operation end 42 to form a closed circulation loop (third circulation loop) between the buffering body 31 and the operation end 42 of the operation module 40. With reference to Fig. 2, the pipeline sets 32, 33, 41 do not communicate with each other to form each one of the circulation loops as an independent loop. Furthermore, the operation end 42 of the operation module 40 may be a greenhouse.

Each one of the valve modules 50 is of the dual-tube type, is deposited at a connecting end of the buffering body 31 such that each one of the pipeline sets 32, 33, 41 is connected to and communicates with the buffering body 31, and each one of the valve modules 50 has two branch pipes 51, two pumps 52, and multiple control valves 53. The branch pipes 51 are connected to and communicate with the buffering body 31 and one of the pipeline sets 32, 33, 41. The two pumps 52 are deposited on the two branch pipes 51. The control valves 53 are deposited on the branch pipes 51 beside the pumps 52. When the multi-pipe-switching heat exchange apparatus needs regular maintenance or repair, one of the two branch pipes 51 of each one of the valve modules 50 is closed by the control valves 53, and the other one of the two branch pipes 51 of the valve module 50 is open. Then, when the multi-pipe-switching heat exchange apparatus of the present invention is in use, the maintenance work such as regular check-up, repair, or replacement can be performed for a part of the components of the multi-pipe-switching heat exchange apparatus during the normal operation.

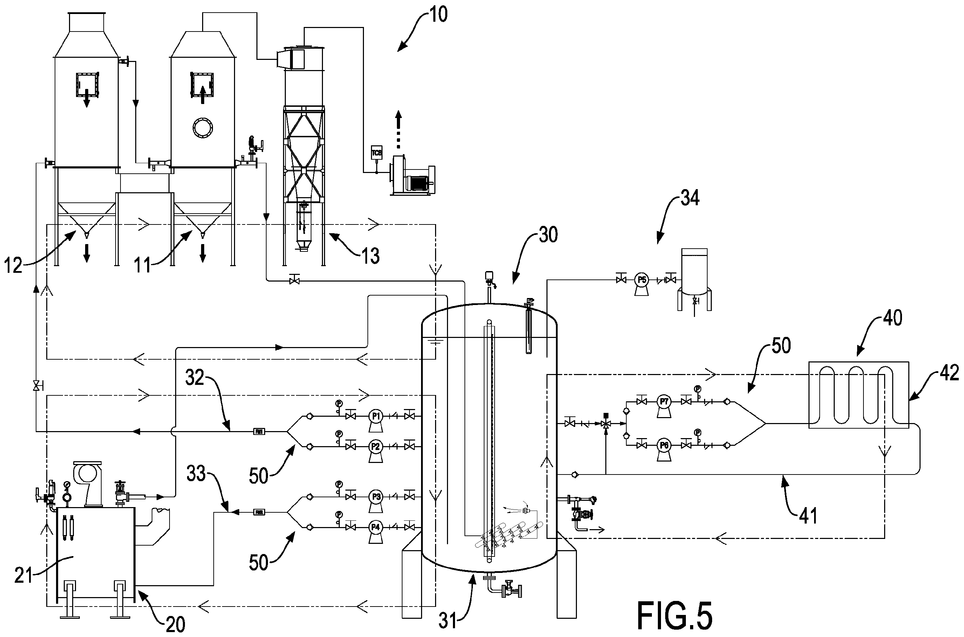

In use, with reference to Figs. 1 and 5, when a user is at the operation end 42 and wants to supply heat source to the greenhouse, the heat source is generated from the heating module 10 and is transported into the at least one heating boiler 11 after the temperature adjustment of the preheater 12, and exchanges heat with the exchange fluid in the buffering body 31 via the first pipeline set 32. Then, the heat source that is generated from the heating module 10 forms a first heat exchange cycle in the first circulation loop between the preheater 12, the at least one heating boiler 11, the first pipeline set 32, and the buffering body 31. After the exchange fluid in the buffering body 31 absorbs the heat of the heat source of the heating module 10, the heat may be transported to the operation end 42 via the third pipeline set 41, so that the user can use the heat at the operation end 42.

When the amount of the heat source that is supplied from the at least one heating boiler 11 is larger than the amount of the heat source that is required for the operation end 42, the exchange fluid in the buffering body 31 may provide a buffering effect to avoid excessive amount of the heat source being directly supplied to the operation end 42 of the operation module 40, and this may prevent the temperature getting too high. After usage at the operation end 42, the heat source that is transported from the buffering body 31 forms a third heat exchange cycle in the third circulation loop between the buffering body 31, the third pipeline set 41, and the operation end 42. Additionally, the heat source is transported in the first heat exchange cycle and the third heat exchange cycle via the buffering body 31, and the first and third heat exchange cycles are independent and do not interfere with each other.

Furthermore, when the user at the operation end 42 feels the temperature is too low or the usage amount of heat is large, the at least one spare boiler 21 of the auxiliary module 20 is started to generate and transport an auxiliary heat source to the buffering body 31 via the second pipeline set 33. Then, the exchange fluid in the buffering body 31 may absorb more heat, and a second heat exchange cycle is formed between the at least one spare boiler 21, the second pipeline set 33, and the buffering body 31.

After absorbing the auxiliary heat source from the auxiliary module 20, the auxiliary heat source may be transported to the operation end 42 via the third pipeline set 41 to supplement the amount of heat source that is insufficient at the heating module 10. Then, the user may adjust the temperature at the operation end 42 according to the user's need and may provide adequate heat sources when requiring large usage amount of heat. Furthermore, the heat source is transported in the second heat exchange cycle and the third heat exchange cycle via the buffering body 31, and the second and third heat exchange cycles are independent and do not interfere with each other.

Consequently, the multi-pipe-switching heat exchange apparatus of the present invention may meet the need at the operation end 42 to exchange heat in a single piping mode between the heating module 10, the buffering module 30, and the operation module 40, and the auxiliary module 20 can be used according to the condition, thereby forming a dual-piping mode of heat exchange. The heat exchange cycles are independent of each other without interference and are connected to and communicate with the buffering body 31 of the buffering module 30, and this may provide a complementary and auxiliary effect between the heat exchange cycles. When the heating module 10 of the multi-pipe-switching heat exchange apparatus is broken or leaking, the heat source can be conveyed through other circulation loops by switching the valve module 50 without stopping the operation of the whole multi-pipe-switching heat exchange apparatus. Then, the convenience in use can be improved and the cost of use also can be reduced. In addition, multiple heat sources can be supplied by the heating module 10 and the auxiliary module 20 in use, and this may reduce the time required for preheating and the heat sources are adjustable and switchable according to the used amount of the heat source to reduce the time and cost of use.

In addition, the buffering module 30 is deposited between the heating module 10, the auxiliary module 20, and the operation module 40 and may provide a buffering effect to the multi-pipe-switching heat exchange apparatus when the amount of the generated heat source is larger than the amount of the required heat source, and this may prevent the temperature from getting too high. Additionally, when maintenance and repair are required after a long period of use, one of the branch pipes 51 of each one of the valve modules 50 is closed and the other one of the branch pipes 51 of the valve module 50 is open to provide a switching effect to the multi-pipe-switching heat exchange apparatus. Then, a part of the components of the multi-pipe-switching heat exchange apparatus may be inspected, repaired, or replaced during the normal operation, and this may improve the convenience of use and maintenance.

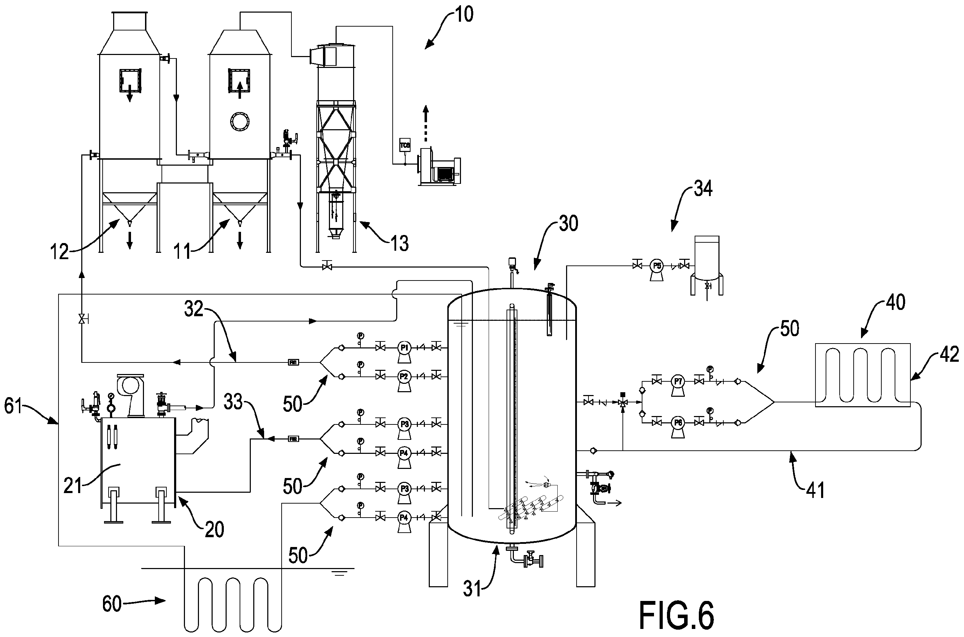

With reference to Fig. 6, a second embodiment of a multi-pipe-switching heat exchange apparatus in accordance with the present invention is substantially the same as the first embodiment except for the following features. A cooling module 60 is connected to and communicates with the buffering module 30 to adjust the temperature of the greenhouse of the operation module 40, and has two ends. One of the two ends of the cooling module 60 is connected to and communicates with the buffering body 31 of the buffering module 30 by one of the valve modules 50, and the other end of the cooling module 60 is connected to and communicates with the buffering body 31 by a fourth pipeline set 61 to form a fourth circulation loop. Furthermore, the cooling module 60 may be the ground water, ice water or other cooling sources. Then, the user at the operation end 42 of the operation module 40 may adjust the temperature of the operation end 42 conveniently and easily by the circulation loops.

According to the above-mentioned structural relationships and features of the multi-pipe-switching heat exchange apparatus, the multi-pipe-switching heat exchange apparatus in the present invention has the following advantages.
1. In use, the multi-pipe-switching heat exchange apparatus may exchange heat according to the need at the operation end 42 by a single piping mode between the heating module 10, the buffering module 30, and the operation module 40, and the auxiliary module 20 can be used according to the condition, thereby forming a dual-piping mode of heat exchange. The heat exchange cycles are independent of each other without interference and are connected to and communicate with the buffering body 31 of the buffering module 30, and this may provide a complementary and auxiliary effect between the heat exchange cycles. When the heating module 10 of the multi-pipe-switching heat exchange apparatus is broken or leaking, the heat source can be conveyed through other circulation loops by switching the valve module 50 without stopping the operation of the whole multi-pipe-switching heat exchange apparatus. Then, the convenience in use can be improved and the cost of use also can be reduced.
2. Multiple heat sources can be supplied by the heating module 10 and the auxiliary module 20 in use, and this may reduce the time required for preheating and the heat sources are adjustable and switchable according to the used amount of the heat source to reduce the time and cost of use.
3. The buffering module 30 is deposited between the heating module 10, the auxiliary module 20, and the operation module 40 and may provide a buffering effect to the multi-pipe-switching heat exchange apparatus when the amount of the generated heat source is larger than the amount of the required heat source, and this may prevent the temperature of the greenhouse getting too high.
4. When maintenance and repair are required after a long period of use, one of the branch pipes 51 of each one of the valve modules 50 is closed and the other one of the branch pipes 51 of the valve module 50 is open to provide a switching effect to the multi-pipe-switching heat exchange apparatus. Then, a part of the components of the multi-pipe-switching heat exchange apparatus may be inspected, repaired, or replaced during the normal operation, and this may improve the convenience of use and maintenance.

## Claims

1. A multi-pipe-switching heat exchange apparatus, comprising:
a heating module (10) being used to produce a heat source and having at least one heating boiler (11);
an auxiliary module (20) deposited beside the heating module (10) and having at least one spare boiler (21);
a buffering module (30) connected to and communicating with the heating module (10) and the auxiliary module (20), and having
a buffering body (31) connected to and communicating with the at least one heating boiler (11) and the at least one spare boiler (21), and having an exchange fluid to transport heat sources that are generated from the at least one heating boiler (11) and the at least one spare boiler (21) in the buffering body (31);
a first pipeline set (32) deposited and connected between the buffering body (31) and the heating module (10); and
a second pipeline set (33) deposited and connected between the buffering body (31) and the auxiliary module (20); and
an operation module (40) connected to and communicating with the buffering module (30) and having
an operation end (42); and
a third pipeline set (41) connected to and communicating with the buffering body (31) and the operation end (42);
wherein the pipeline sets (32, 33, 41) are independent without communicating with each other;
wherein the multiple pipe switching heat exchange apparatus has multiple valve modules (50), and each one of the valve modules (50) being of the dual-tube type, deposited at a connecting end of the buffering body (31) such that each one of the pipeline sets (32, 33, 41) is connected to and communicates with the buffering body (31), and each one of the valve modules (50) having;
two branch pipes (51) connected to and communicating with the buffering body (31) and one of the pipeline sets (32, 33, 41);
two pumps (52) deposited on the two branch pipes (51); and
multiple control valves (53) deposited on the branch pipes (51) beside the pumps (52);
**characterized in that** the multi-pipe-switching heat exchange apparatus comprises:
a preheater (12) deposited beside the at least one heating boiler (11), connected to and communicating with the at least one heating boiler (11) to adjust the temperature of the heat source before the heat source enters the at least one heating boiler (11) via the preheater (12) to prevent excessive temperature of the heat source from directly entering and damaging the at least one heating boiler (11);
a first circulation loop being a closed loop, formed between the buffering body (31), the preheater (12), and the at least one heating boiler (11);
a second circulation loop being a closed loop, formed between the buffering body (31) and the at least one spare boiler (21); and
a third circulation loop being is a closed loop, formed between the buffering body (31) and the operation end (42) of the operation module (40).

2. The multi-pipe-switching heat exchange apparatus as claimed in claim 1, wherein the heating module (10) has a chimney pipe group (13) connected to and communicating with a top of the at least one heating boiler (11), being opposite the preheater (12), and being used to guide the heat source after heat exchanging and fuel gas flowing out of the at least one heating boiler (11) to avoid excessive pressure within the at least one heating boiler (11) and to provide an effect of discharging hot air and importing cold air.

3. The multi-pipe-switching heat exchange apparatus as claimed in claim 2, wherein
the multi-pipe-switching heat exchange apparatus has a cooling module (60) connected to and communicating with the buffering module (30) to adjust the temperature of the operation module (40), and having two ends; and
one of the two ends of the cooling module (60) is connected to and communicates with the buffering body (31) of the buffering module (30) by one of the valve modules (50), and the other end of the cooling module (60) is connected to and communicates with the buffering body (31) by a fourth pipeline set (61) to form a fourth circulation loop.

4. The multi-pipe-switching heat exchange apparatus as claimed in claim 3, wherein
the at least one heating boiler (11) is a steam boiler or a hot water boiler; and
the at least one spare boiler (21) is a steam boiler or a hot water boiler.

5. The multi-pipe-switching heat exchange apparatus as claimed in claim 1 or 2, wherein
the at least one heating boiler (11) is a steam boiler or a hot water boiler; and
the at least one spare boiler (21) is a steam boiler or a hot water boiler.

6. The multi-pipe-switching heat exchange apparatus as claimed in claim 1, wherein
the multi-pipe-switching heat exchange apparatus has a cooling module (60) connected to and communicating with the buffering module (30) to adjust the temperature of the operation module (40), and having two ends; and
one of the two ends of the cooling module (60) is connected to and communicates with the buffering body (31) of the buffering module (30) by one of the valve modules (50), and the other end of the cooling module (60) is connected to and communicates with the buffering body (31) by a fourth pipeline set (61) to form a fourth circulation loop.

## Patentansprüche

1. Eine Mehrrohr-Umschalt-Wärmetauschvorrichtung, umfassend:
ein Heizmodul (10), das verwendet wird, um eine Wärmequelle zu erzeugen, und das mindestens einen Heizkessel (11) umfasst,
ein Hilfsmodul (20), das neben dem Heizmodul (10) angeordnet ist und mindestens einen Ersatzheizkessel (21) umfasst,
ein Puffermodul (30), das mit dem Heizmodul (10) und dem Hilfsmodul (20) verbunden ist und kommuniziert, und das umfasst:
einen Pufferkörper (31), der mit dem mindestens einen Heizkessel (11) und dem mindestens einen Ersatzheizkessel (21) verbunden ist und kommuniziert, und der ein Austauschfluid umfasst, um Wärmequellen, die von dem mindestens einen Heizkessel (11) und dem mindestens einen Ersatzheizkessel (21) erzeugt werden, in dem Pufferkörper (31) zu transportieren,
einen ersten Rohrleitungssatz (32), der zwischen dem Pufferkörper (31) und dem Heizmodul (10) angeordnet und angeschlossen ist, und
einen zweiten Rohrleitungssatz (33), der zwischen dem Pufferkörper (31) und dem Hilfsmodul (20) angeordnet und angeschlossen ist, und
ein Betriebsmodul (40), das mit dem Puffermodul (30) verbunden ist und kommuniziert, und das umfasst:
ein Betriebsende (42) und
einen dritten Rohrleitungssatz (41), der mit dem Pufferkörper (31) und dem Betriebsende verbunden ist und kommuniziert,
wobei die Rohrleitungssätze (32, 33, 41) unabhängig sind, ohne miteinander zu kommunizieren,
wobei die Mehrrohr-Umschalt-Wärmetauschvorrichtung mehrere Ventilmodule (50) hat und jedes der Ventilmodule (50) vom Doppelrohrtyp ist, an einem Verbindungsende des Pufferkörpers (31) angeordnet ist, so dass jeder von den Rohrleitungssätzen (32, 33, 41) mit dem Pufferköper (31) verbunden ist und kommuniziert, und wobei jedes der Ventilmodule (50) umfasst:
zwei Abzweigrohre (51), die mit dem Pufferkörper (31) und einem der Rohrleitungssätze (32, 33, 41) verbunden sind und kommunizieren,
zwei Pumpen (52), die an den beiden Abzweigrohren (51) angeordnet sind, und
mehrere Regelventile (53), die an den Abzweigrohren (51) neben den Pumpen (52) angeordnet sind,
**dadurch gekennzeichnet, dass** die Mehrrohr-Umschalt-Wärmetauschvorrichtung umfasst:
einen Vorheizer (12), der neben dem mindestens einen Heizkessel (11) angeordnet ist, der mit dem mindestens einen Heizkessel (11) verbunden ist und kommuniziert, um die Temperatur der Wärmequelle zu regeln, bevor die Wärmequelle über den Vorheizer (12) in den mindestens einen Heizkessel (11) gelangt, um zu verhindern, dass eine überhöhte Temperatur der Wärmequelle direkt in den mindestens einen Heizkessel (11) gelangt und diesen beschädigt,
eine erste Zirkulationsschleife, die eine geschlossene Schleife ist, die zwischen dem Pufferkörper (31), dem Vorheizer (12) und dem mindestens einen Heizkessel (11) ausgebildet ist,
eine zweite Zirkulationsschleife, die eine geschlossene Schleife ist, die zwischen dem Pufferkörper (31) und dem mindestens einen Ersatzheizkessel (21) ausgebildet ist, und
eine dritte Zirkulationsschleife, die eine geschlossene Schleife ist, die zwischen dem Pufferkörper (31) und dem Betriebsende (42) des Betriebsmoduls (40) ausgebildet ist.

2. Die Mehrrohr-Umschalt-Wärmetauschvorrichtung nach Anspruch 1, wobei das Heizmodul (10) eine Kaminrohrgruppe (13) hat, die mit einer Oberseite des mindestens einen Heizkessels (11) verbunden ist und kommuniziert, die dem Vorheizer (12) entgegengesetzt ist und die verwendet wird, um die Wärmequelle nach dem Wärmetauschen und dem Herausströmen von Brenngas aus dem mindestens einen Heizkessel (11) zu leiten, um einen Überdruck innerhalb des mindestens einen Heizkessels (11) zu vermeiden und einen Effekt des Ableitens von heißer Luft und des Einbringens von kalter Luft bereitzustellen.

3. Die Mehrrohr-Umschalt-Wärmetauschvorrichtung nach Anspruch 2, wobei
die Mehrrohr-Umschalt-Wärmetauschvorrichtung ein Kühlmodul (60) hat, das mit dem Puffermodul (30) verbunden ist und kommuniziert, um die Temperatur des Betriebsmoduls (40) zu regeln, und zwei Enden hat, und
eines der beiden Enden des Kühlmoduls (60) durch eines der Ventilmodule (50) mit dem Pufferkörper (31) des Puffermoduls (30) verbunden ist und kommuniziert, und das andere Ende des Kühlmoduls (60) durch einen vierten Rohrleitungssatz (61) mit dem Pufferkörper (31) verbunden ist und kommuniziert, um eine vierte Zirkulationsschleife auszubilden.

4. Die Mehrrohr-Umschalt-Wärmetauschvorrichtung nach Anspruch 3, wobei
der mindestens eine Heizkessel (11) ein Dampfkessel oder ein Warmwasserheizkessel ist und
der mindestens eine Ersatzheizkessel (21) ein Dampfkessel oder ein Warmwasserheizkessel ist.

5. Die Mehrrohr-Umschalt-Wärmetauschvorrichtung nach Anspruch 1 oder 2, wobei
der mindestens eine Heizkessel (11) ein Dampfkessel oder ein Warmwasserheizkessel ist und
der mindestens eine Ersatzheizkessel (21) ein Dampfkessel oder ein Warmwasserheizkessel ist.

6. Die Mehrrohr-Umschalt-Wärmetauschvorrichtung nach Anspruch 1, wobei
die Mehrrohr-Umschalt-Wärmetauschvorrichtung ein Kühlmodul (60) hat, das mit dem Puffermodul (30) verbunden ist und kommuniziert, um die Temperatur des Betriebsmoduls (40) zu regeln, und zwei Enden hat, und
eines der beiden Enden des Kühlmoduls (60) durch eines der Ventilmodule (50) mit dem Pufferkörper (31) des Puffermoduls (30) verbunden ist und kommuniziert, und das andere Ende des Kühlmoduls (60) durch einen vierten Rohrleitungssatz (61) mit dem Pufferkörper (31) verbunden ist und kommuniziert, um eine vierte Zirkulationsschleife auszubilden.

## Revendications

1. Appareil d'échange thermique à plusieurs conduits, comprenant :
un module de chauffage (10) utilisé pour produire une source de chaleur et ayant au moins une chaudière de chauffage (11) ;
un module auxiliaire (20) déposé à côté du module de chauffage (10) et ayant au moins une chaudière de rechange (21) ;
un module de mise en tampon (30) relié à et qui communique avec le module de chauffage (10) et le module auxiliaire (20), et ayant
un corps de mise en tampon (31) relié à et qui communique avec la au moins une chaudière de chauffage (11) et la au moins une chaudière de rechange (21), et ayant un fluide d'échange destiné à transporter les sources de chaleur qui sont générées entre la au moins une chaudière de chauffage (11) et la au moins une chaudière de rechange (21) dans le corps de mise en tampon (31) ;
un premier groupe de conduites (32) déposé et relié entre le corps de mise en tampon (31) et le module de chauffage (10) ; et
un second groupe de conduites (33) déposé et relié entre le corps de mise en tampon (31) et le module auxiliaire (20) ; et
un module d'exploitation (40) relié à et qui communique avec le module de mise en tampon (30) et ayant
une extrémité d'exploitation (42) ; et
un troisième groupe de conduites (41) relié à et qui communique avec le corps de mise en tampon (31) et l'extrémité d'exploitation (42) ;
dans lequel les groupes de conduites (32, 33, 41) sont indépendants sans communiquer les uns avec les autres ;
dans lequel l'appareil d'échange thermique à plusieurs conduits possède plusieurs modules de valves (50), et chacun des modules de valves (50) est à tube double, déposés au niveau d'une extrémité de raccordement du corps de mise en tampon (31) de sorte que chacun des groupes de conduites (32, 33, 41) soit relié à et communique avec le corps de mise en tampon (31), et chacun des modules de valves (50) possède :
deux conduits de dérivation (51) reliés à et qui communiquent avec le corps de mise en tampon (31) et l'un des groupes de conduites (32, 33, 41) ;
deux pompes (52) déposées sur les deux conduits de dérivation (51) ; et
plusieurs soupapes de commande (53) déposées sur les conduits de dérivation (51) à côté des pompes (52) ;
**caractérisé en ce que** l'appareil d'échange thermique à plusieurs conduits comprend :
un préchauffeur (12) déposé à côté de la au moins une chaudière de chauffage (11), relié à et qui communique avec la au moins une chaudière de chauffage (11) afin de régler la température de la source de chaleur avant que la source de chaleur pénètre dans la au moins une chaudière de chauffage (11) via le préchauffeur (12) afin d'empêcher toute température excessive de la source de chaleur de pénétrer directement et d'endommager la au moins une chaudière de chauffage (11) ;
une première boucle de circulation qui est une boucle fermée, formée entre le corps de mise en tampon (31), le préchauffeur (12), et la au moins une chaudière de chauffage (11) ;
une seconde boucle de circulation qui est une boucle fermée, formée entre le corps de mise en tampon (31) et la au moins une chaudière de rechange (21) ; et
une troisième boucle de circulation qui est une boucle fermée, formée entre le corps de mise en tampon (31) et l'extrémité d'exploitation (42) du module d'exploitation (40).

2. Appareil d'échange thermique à plusieurs conduits selon la revendication 1, dans lequel le module de chauffage (10) possède un groupe de conduits de cheminée (13) relié à et qui communique avec une partie supérieure de la au moins une chaudière de chauffage (11), qui est opposée au préchauffeur (12), et qui est utilisé pour guider la source de chaleur après l'échange thermique et un gaz combustible qui sort de la au moins une chaudière de chauffage (11) afin d'empêcher toute pression excessive dans la au moins une chaudière de chauffage (11), et pour assurer un effet d'évacuation d'air chaud et d'importation d'air froid.

3. Appareil d'échange thermique à plusieurs conduits selon la revendication 2, dans lequel
l'appareil d'échange thermique à plusieurs conduits possède un module de refroidissement (60) relié à et qui communique avec le module de mise en tampon (30) afin de régler la température du module d'exploitation (40), et ayant deux extrémités ; et
l'une des deux extrémités du module de refroidissement (60) est reliée à et communique avec le corps de mise en tampon (31) du module de mise en tampon (30) par l'un des modules de valves (50), et l'autre extrémité du module de refroidissement (60) est reliée à et communique avec le corps de mise en tampon (31) par un quatrième groupe de conduites (61) afin de former une quatrième boucle de circulation.

4. Appareil d'échange thermique à plusieurs conduits selon la revendication 3, dans lequel
la au moins une chaudière de chauffage (11) est une chaudière à vapeur ou une chaudière à eau chaude ;
et
la au moins une chaudière de rechange (21) est une chaudière à vapeur ou une chaudière à eau chaude.

5. Appareil d'échange thermique à plusieurs conduits selon la revendication 1 ou 2, dans lequel
la au moins une chaudière de chauffage (11) est une chaudière à vapeur ou une chaudière à eau chaude ;
et
la au moins une chaudière de rechange (21) est une chaudière à vapeur ou une chaudière à eau chaude.

6. Appareil d'échange thermique à plusieurs conduits selon la revendication 1, dans lequel
l'appareil d'échange thermique à plusieurs conduits possède un module de refroidissement (60) relié à et qui communique avec le module de mise en tampon (30) afin de régler la température du module d'exploitation (40), et ayant deux extrémités ; et
l'une des deux extrémités du module de refroidissement (60) est reliée à et communique avec le corps de mise en tampon (31) du module de mise en tampon (30) par l'un des modules de valves (50), et l'autre extrémité du module de refroidissement (60) est reliée à et communique avec le corps de mise en tampon (31) par un quatrième groupe de conduites (61) afin de former une quatrième boucle de circulation.
